# EUROPÄISCHE PATENTSCHRIFT

(11) **EP 0 508 423 B1**
(45) Veröffentlichungstag und Bekanntmachung des Hinweises auf die Patenterteilung: **14.12.1994**
(21) Anmeldenummer: 92106125.5
(22) Anmeldetag: 09.04.1992
(51) Int. Cl.: F16D 69/00

(54) **Multielement Sinterbremsbelag für Teilbelag-Scheibenbremsen**
Multi element sintered friction material for part-lining disc brakes
Garniture de friction frittée à multi élément pour freins à disques de garniture part

(30) Priorität: 12.04.1991 DE 4111926
(43) Veröffentlichungstag der Anmeldung: 14.10.1992
(73) Patentinhaber: BECORIT - GESELLSCHAFT W. BECKMANN GmbH & Co. KG, D-45659 Recklinghausen (DE)
(72) Erfinder: Otto, Alfred, W-4352 Herten (DE)
(74) Vertreter: Jung, Hermann L., Dipl.-Chem.

(56) Entgegenhaltungen:
- EP-A- 0 106 782
- AT-B- 277 674
- FR-A- 2 230 898
- US-A- 3 698 526
- US-A- 4 278 153

## Beschreibung

Die Erfindung betrifft einen Multielement Sinterbremsbelag für Teilbelag-Scheibenbremsen gemäß der Präambel von Anspruch 1.

Die Belastungen von Scheibenbremsen steigen mit den zunehmenden Anforderungen an die Schienenfahrzeuge. Diese Mehrbelastungen resultieren zum Beispiel aus grösseren Wagengewichten oder gesteigerten Geschwindigkeiten. Der Ausgleich für die damit steigenden in Wärme umzuwandelnden Energieen kann nicht immer durch Vergrösserung der Anzahl von Scheibenbremsen im Fahrzeug geschaffen werden. Für die heute üblichen organischen Bremsbeläge zeigt sich dabei zum Beispiel die thermische Leistungsgrenze. Dies erfordert den Einsatz von metallischen Reibwerkstoffen, wie zum Beispiel Buntmetallsinter. Bei der Reibpaarung Sinterbelag/Guss- oder Stahlbremsscheibe kommt der Verträglichkeit der beiden Reibflächen besondere Bedeutung zu, das heisst der Bremsbelag darf keine Aggressivität, zum Beispiel Riefenbildung, auf den Bremsflächen bewirken. Es ist im übrigen bekannt (EP 0 106 782 B1) dass Sinterbremsbeläge nur in einzelnen, nicht verbundenen Elementen in allen Bedarfsfällen funktionieren.

Diese Elemente werden als Zylinderkörper ausgeführt und sind auf einer gemeinsamen Trägerplatte aufgebracht. Es sind Konstruktionen bekannt, bei denen die Sinterelemente auf Trägerbleche aufgeschweisst oder über Zwischenplatten gehalten werden. Solche Konstruktionen sind aber sehr aufwendig und bedürfen einer besonderen Sorgfalt bei der Herstellung. Die Sinterelemente selbst werden zur Verbesserung der inneren Stabilität mit besonderen Ummantelungen versehen. Diese sind oft als Ringe oder Töpfe in Stahl oder Buntmetallrohr ausgeführt. Diese Teile haben aber alle den Nachteil, dass sie sich während der Verschleissphase aufbördeln, die Sintermasse nicht fest genug halten und zu Beschädigungen der Bremsflächen oder zu Veränderungen des Reibverhaltens führen.

Der vorliegenden Erfindung liegt daher die Aufgabe zugrunde, die Nachteile der bekannten Bremsbeläge zu vermeiden und dafür zu sorgen, dass sich das Reibverhalten während der Lebensdauer der Sinderelemente nicht wesentlich verändert und vor allem Beschädigungen der Bremsflächen an den Bremsscheiben zu vermeiden.

Die Lösung dieser Aufgabe besteht darin, dass die zylindrischen Sinterelemente jeweils mit einem Verstärkungsring versehen sind, welcher auf der Trägerplatte und/oder mit dem Sinterelement fest verbunden ist und dessen Höhe mindestens bis zur Verschleissgrenze geht, und dass das Material der Verstärkungsringe etwa die gleichen Verschleiss- und Reibeigenschaften aufweist, wie die Sinterelemente. Dabei ist das Sinterelement und der Verstärkungsring aus einander ähnlichem Sintermaterial gefertig und gemeinsam auf der Trägerplatte an den Stirnflächen mittels Lot aufgesintert.

Zweckmässig besitzt das Sinterelement und der Verstärkungsring einen Ausdehnungskoeffizienten, durch den der vorgesehene Schrumpfsitz beider Teile im wesentlichen erhalten bleibt.

Der Vorteil der erfindungsgemässen Ausbildung der Sinterbremsbeläge besteht darin, dass die bekannten Nachteile vermieden werden und dass vor allem keine wesentliche Veränderung des Reibwertes über die Lebensdauer des Bremsbelages auftritt. Weiter ist keine separate Befestigung von Ring und Sinterelement vorhanden. Die Form des Elementes bleibt dauernd erhalten. Deshalb tritt konstant nur ein geringer Verschleiss auf und es tritt kein Ausbröckeln auf.

In den Zeichnungen ist eine beispielsweise Ausbildung der Erfindung dargestellt und zwar zeigt :
- Figur 1: eine Draufsicht auf die Vorderseite eines Bremsbelags,
- Figur 2: einen Schnitt nach der Linie II-II der Fig. 1.

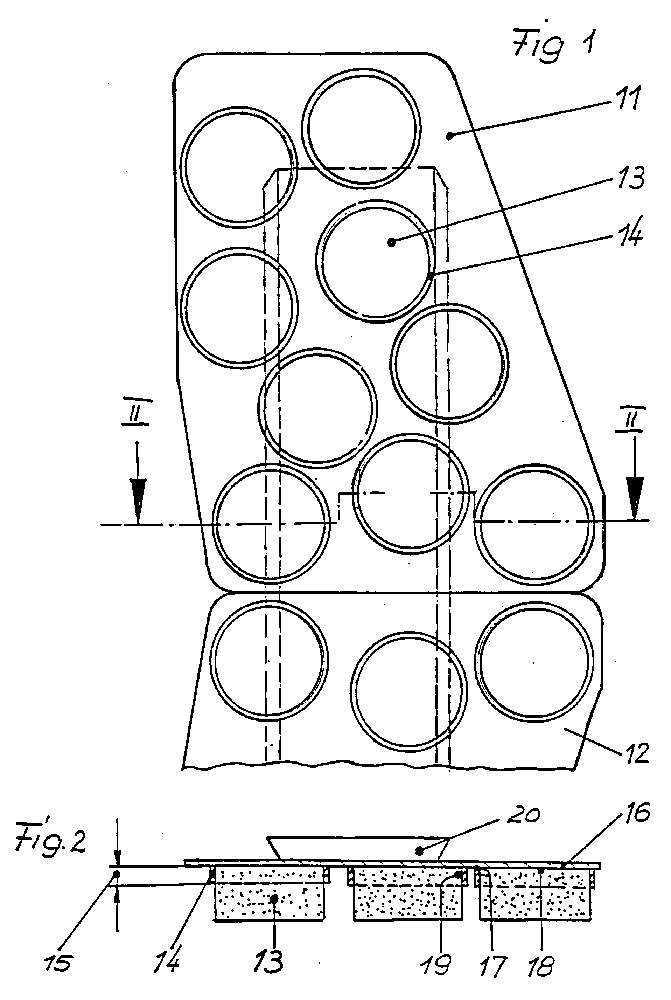

Nach den Figuren 1 und 2 besteht der Bremsbelag aus zwei Hälften 11 und 12, wobei die Hälfte 12 spiegelbildlich zur Hälfte 11 ist. Beide Hälften bestehen aus einer Trägerplatte 16, auf deren der Reibfläche der Bremsscheibe zugewandten Vorderseite zylindrische Sinterelemente 13 angeordnet sind. Auf der Rückseite der Trägerplatte 16 ist ein Schwalbenschwanz 2o zur Befestigung des Bremsbelags im Bremsbackenhalter vorgesehen. Das Material der Sinterelemente 13 ist so ausgelegt, dass gute Reib- und Verschleisseigenschaften erzielt werden. Zur Erhöhung der mechanischen Festigkeit wird der der Trägerplatte 16 zugewandte Teil des Sinterelements mit einem Verstärkungsring 14 versehen, wobei die Stirnfläche 17 des Verstärkungsrings 14 und die Stirnfläche 18 des Sinterelements 13 gleichzeitig mit der Trägerplatte 16 durch Aufsintern mittels Lot kraftschlüssig verbunden ist. Die Verbindung zwischen Verstärkungsring 14 und Sinterelement 13 erfolgt durch Aufschrumpfen des Verstärkungsrings auf dem Sinterelement 13. Die Höhe 15 des Verstärkungsrings reicht mindestens bis zur Verschleissgrenze des Sinterelements 13.

Wichtig ist die Tatsache, dass die Verstärkungsringe 14 nicht nur gute Reib- und Verschleisseigenschaften besitzen, sondern dass diese Eigenschaften den Reib- und Verschleisseigenschaften der Sinterelemente 13 gleichen oder zumindest sehr nahe kommen. Dies führt dazu, dass der Verstärkungsring 14 ebenfalls aus einem Sintermaterial besteht. In diesem Falle kann es zweckmässig sein, den Verstärkungsring 14 auch mit dem Sinterelement 13 zu verlöten oder zusammenzusintern. Dazu wird das Material des Verstärkungsrings 14 so gewählt, dass sein Ausdehnungskoeffizient den Schrumpfsitz zwischen Sinterelement und Verstärkungsring 14 im wesentlichen aufrechterhält.

Im übrigen kann als geeignetes Material für den Verstärkungsring neben dem schon erwähnten Sintermaterial auch Grauguss feinkörnig verwendet werden, dessen Reibeigenschaften den Eigenschaften des Sintermaterials entspricht, aus dem die Sinterelemente 13 bestehen.

## Patentansprüche

1. Multielemente Sinterbremsbelag für Teilbelagscheibenbremsen von insbesondere Schienenfahrzeugen, bestehend aus einer ein- oder oder mehrteiligen Trägerplatte (16), auf deren der Reibfläche der Bremsscheibe zugewandten Vorderseite zylindrische Sinterelemente (13) angeordnet sind und auf deren Rückseite ein Schwalbenschwanz (20) zur Befestigung des Bremsbelags im Bremsbackenhalter vorgesehen ist, wobei die zylindrischen Sinterelemente (13) jeweils mit einem Verstärkungsring (14) versehen sind, welcher auf der Trägerplatte (16) und/oder mit dem Sinterelement (13) fest verbunden ist und dessen Höhe (15) mindestens bis zur Verschleissgrenze reicht, dadurch gekennzeichnet, dass das Material der Verstärkungsringe (14) etwa die gleichen Verschleiss- und Reibeigenschaften aufweist, wie die Sinterelemente (13) und dass das Sinterelement (13) und der Verstärkungsring (14) gemeinsam mit den Stirnflächen (17,18) auf die Trägerplatte (16) mittels Lot aufgesintert ist.

2. Sinterbremsbelag nach Anspruch 1, dadurch gekennzeichnet, dass der Verstärkungsring (14) mittels Schrumpfung auf das Sinterlement aufgebracht und befestigt ist.

3. Sinterbremsbelag nach einem der Ansprüche 1 bis 2, dadurch gekennzeichnet, dass das Sinterelement (13) und der Verstärkungsring (14) einen Ausdehnungskoeffizienten besitzen,durch den der vorgegebene Schrumpfsitz beider Teile im wesentlichen erhalten bleibt.

## Claims

1. Multi-element sintered brake lining for partially lined disc brakes of, in particular, rail vehicles, consisting of a single-part or multi-part support plate (16) on whose front end, facing towards the friction surface of the brake disc, cylindrical sinter elements (13) are arranged and on whose rear end, a dovetail (20) is provided for fastening the brake lining in the brake shoe holder, each of the cylindrical sinter elements (13) being provided with a reinforcement ring (14) which is firmly connected to the support plate (16) and/or to the sinter element (13) and whose height (15) extends at least as far as the wear limit, characterized in that the material of the reinforcement ring (14) has approximately the same wear and friction properties as the sinter elements (13) and in that the sinter element (13) and the reinforcement ring (14), in common with the end surfaces (17, 18), are sintered onto the support plate (16) by means of solder.

2. Sintered brake lining according to Claim 1, characterized in that the reinforcement ring (14) is applied to and fastened to the sinter element by means of shrinking.

3. Sintered brake lining according to one of Claims 1 to 2, characterized in that the sinter element (13) and the reinforcement ring (14) have a coefficient of expansion by means of which the specified shrunk seating of both parts is substantially maintained.

## Revendications

1. Garniture de freins frittée à multi-éléments pour des freins à disques à garnitures partielles, en particulier pour véhicules sur rails, comprenant une platine support (16) en une ou plusieurs parties, sur la surface antérieure de laquelle, et faisant face à la surface de friction du disque de frein, sont disposés des éléments cylindriques frittés (13) et sur la surface postérieure de laquelle est prévu un élément en queue d'arronde (26) pour la fixation de la garniture de freins dans le porte-mâchoire du frein, les éléments cylindriques frittés (13) étant munis chacun d'une bague de renforcement (14), cette dernière étant fixée ferme sur la platine support (16) et/ou avec l'élément fritté (13) et dont la hauteur (15) égale au moins la limite d'usure, caractérisé par le fait que le matériau constituant les bagues de renforcement (14) présente les mêmes caractéristiques à l'usure et à la friction que les éléments frittés (13) et que l'élément fritté (13) et la bague de renforcement (14), avec les faces frontales (17,18), sont frittés ensemble sur la platine support (16) par soudure tendre

2. Garniture de freins frittée suivant la revendication 1, caractérisée par le fait que la bague de renforcement (14) est appliquée sur l'élément fritté par frettage et y est fixée.

3. Garniture de freins frittée suivant l'une des caractéristiques 1 à 2, caractérisée par le fait que l'élément fritté (13) et la bague de renforcement (14) possèdent un coéfficient de dilatation tel que l'ajustement fretté des deux parties soit conservé pour l'essentiel.
